# EUROPEAN PATENT APPLICATION

(11) **EP 0 575 156 A1**
(43) Date of publication of application: **22.12.1993**
(21) Application number: 93304678.1
(22) Date of filing: 16.06.1993
(51) Int. Cl.: B07C 3/18, B07C 1/00, G06K 17/00

(54) **Method of producing addressed security items**

(30) Priority: 17.06.1992 GB 9213075
(71) Applicant: INOTECH SYSTEMS LIMITED, Sandbach Cheshire, CW11 0NN (GB)
(72) Inventor: Willis, Ian, Macclesfield Cheshire SK10 3NR (GB)
(74) Representative: Wain, Christopher Paul

(57) **Abstract**

A method of producing addressed security items, for example for the production and mailing of personal cheque books, comprises reading a codeline (14) present on item (10), printing a corresponding bar code (26) on the item, e.g. the cheque book cover; enveloping the item (10) and, using the bar code (26), printing the appropriate address on the envelope (28). This method allows security items to be addressed without the need either to have an address slip permanently attached to the item, or an address slip which must be manually removed.

## Description

This invention relates to a method of producing addressed security items and is particularly, but not exclusively, concerned with the production and mailing of personal cheque books.

It is very important that personalised cheque books be mailed to the particular customer's address, and for many years this requirement has been difficult and costly to meet. Basically, the customer's address cannot be printed on the cheque book itself, but must be provided separately.

In a continuous web fed system, address slips can either be produced within the book and manually removed before enveloping, or the address slips are produced off line and married up with the book manually. The former method is the more secure, but both methods entail the generation of an address slip and then manual physical movement of the slip.

In sheet fed systems, address slips can be produced by either of the above methods, but in addition can be stitched on top of the front cover of the book. By this method, the physical moving of the slip is obviated, but the slip is permanently attached to the book, and not all banks will accept this.

An ideal solution would be to be able to address the book automatically and more securely by dispensing with the need for a window envelope. We have now found a way of achieving this that can be used on most of the existing bookmaking systems with little or no alteration to the machines.

According to the present invention, there is provided a method of producing an addressed security item, comprising the steps of reading a codeline present on the item, printing a corresponding bar code on the item, enveloping the item and, using the bar code, printing the appropriate address on the envelope.

Preferably, the security item is a book. Most preferably, the security item is a cheque book, and, the codeline present on the bottom of the cheques in the cheque book is read and a corresponding bar code printed on the cheque book cover; the cheque book is then enveloped and, using the bar code, the appropriate address is printed on the envelope.

In order that the invention may be more fully understood, embodiments thereof will now be described, by way of illustration only, with reference to the accompanying drawings, in which:
Figure 1 is a side view of a cheque book addressing system embodying the invention;
Figure 2 is an overhead view of the track of a cheque book addressing system embodying the invention;
Figure 3 illustrates a bar code reader scanning an enveloped book in accordance with the invention;
Figure 4 illustrates a second cheque book addressing system embodying the invention; and
Figure 5 illustrates a wedge device for opening a book in accordance with a method of the present invention.

In a preferred method of the invention, in which the security item is a cheque book, the cheques are personalised and bound into cheque books by ordinary methods, without alteration. Because banks require books to be stitched through the back cover, books are always delivered from finishing systems facing front cover downwards.

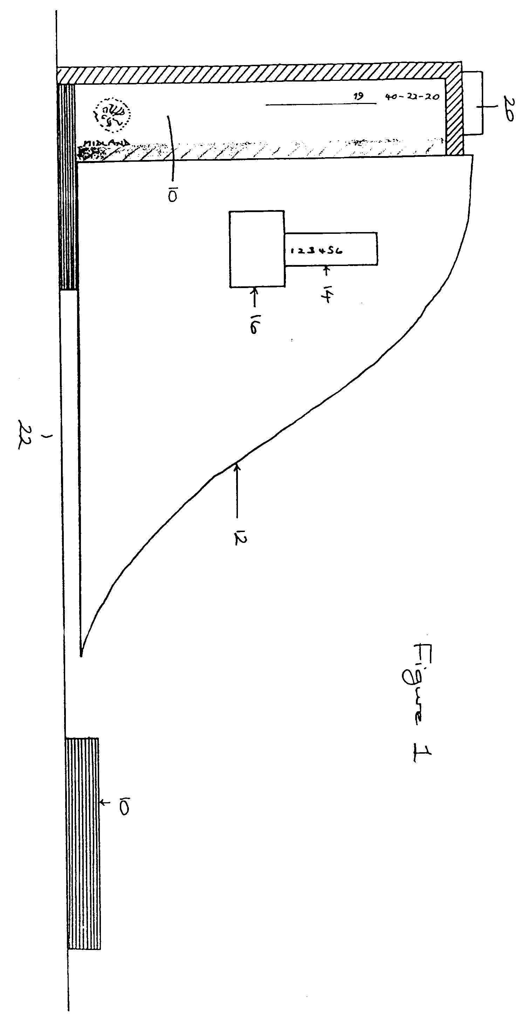

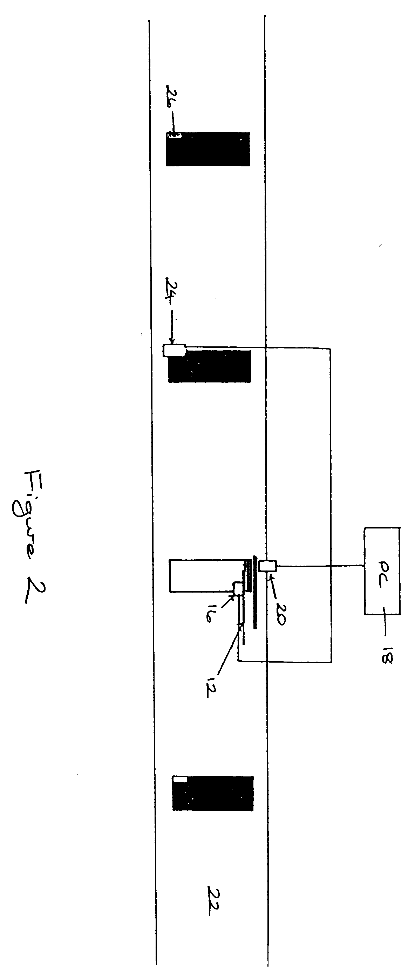

Referring to Figures 1 and 2 of the drawings, in one preferred arrangement of the invention, the end of the binding line is interfaced with a delivery which will push the cheque book (10) into a book opening device (12). This will be adjustable for book thicknesses, sizes and styles. The unit will open the book (10) approximately half way through, and then securely hold half the book open in a vertical position. Whilst the book is held open in this manner, the codeline (14) shown on the cheque will be read by an optical reader (16) which will move down the cheque. This reader (16) will be linked to a personal computer (PC;18) which will hold the details of the production run. A unique number can be allocated for each cheque book. The system will be capable of reading E13B, OCRB, CM7 or any other universally recognised codelines.

The PC (18) will also be linked to an ink jet printer (20) and bar code reader (24). Whilst the cheque book (10) is still held open in the vertical position, the ink jet printer (20) will print the unique number in the form of a bar code (26) on the outside of the back cover. The book (10) will then be released, it will be closed, and will move down the track (22). Further down the track (22), it will then be held and the bar code (26) on the back cover will be scanned. This will ensure that the bar code (26) is readable and correct. If the bar code cannot be read or is invalid the book will be rejected.

The bar code can be printed with black ink or with an invisible UV ink.

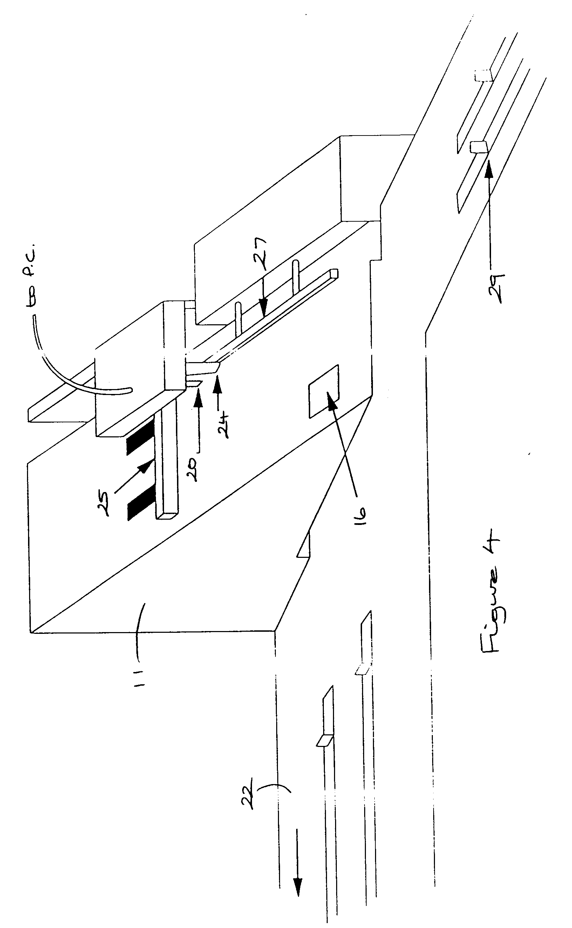

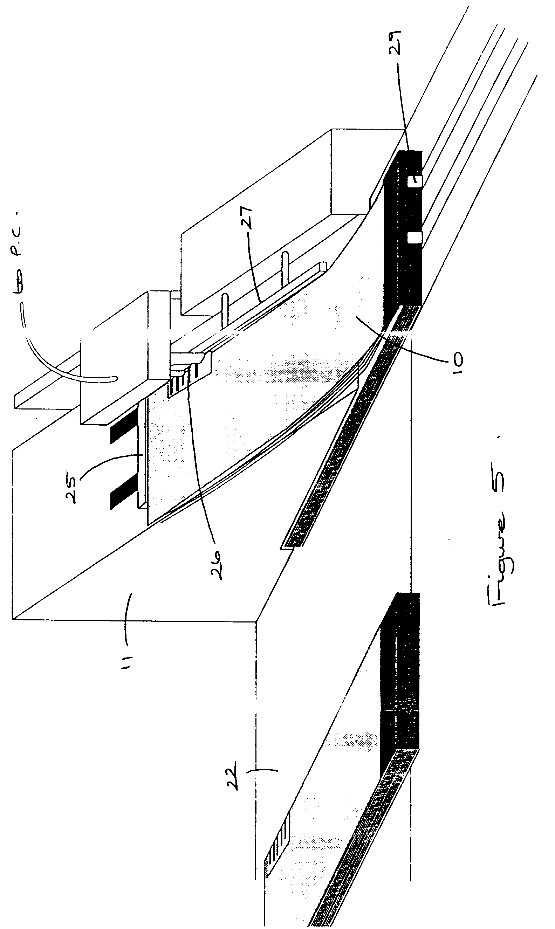

Referring to Figures 4 and 5 of the drawings, in a second arrangement of the invention, the end of the binding line is interfaced with a delivery which will push the cheque book (10) into a wedge unit (11), which will also be adjustable for book thicknesses, sizes and styles. The wedge (11) will force open the book (10) with half the book being driven under the wedge. The upper half of the book will be forced up the wedge (see Figure 2). The cheque will be face downwards and in moving up the wedge will pass over an optical reader (16). This will read the codeline printed on the bottom of the cheque. The reader (16) will be linked to a personal computer (18), which will hold details of the production run. A unique number can be allocated for each cheque book.

The PC (18) will also be linked to an ink jet printer (20) and bar code reader (24). When the cheque book reaches the stop bar (25) on the wedge, the ink jet printer (20) will move down and print a bar code on the outside of the back cover. The bar code reader (24) will follow the printer and will read the bar code to ensure that it is readable and valid.

After printing the bar or other code on the book cover, the book is then ejected sideways by an eject bar (27) to facilitate the next book being presented for reading and ink jet printing. The next book is pushed into place by a book pusher (29). The books are subsequently removed along a transport track (22).

These are merely preferred ways of providing a code on the cover of a cheque book based on the enclosed personal account information on each cheque. Other ways of achieving the same end, not using such book opening devices or the like, can of course be used.

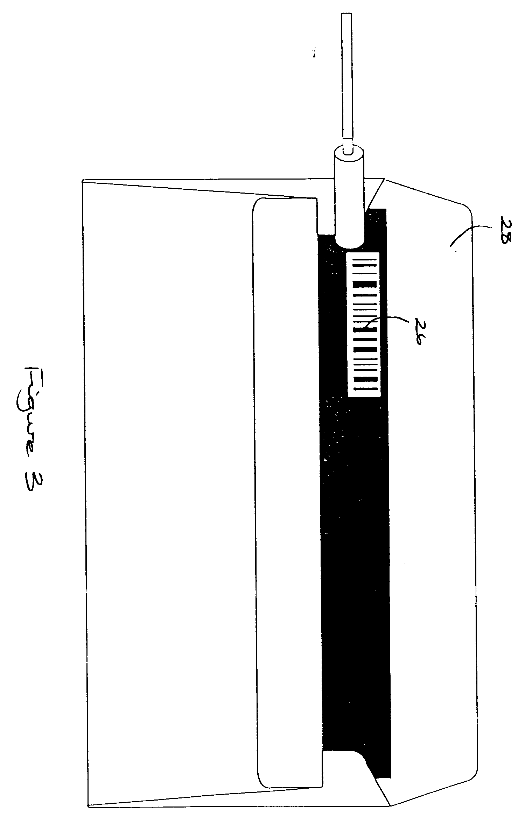

At this stage, the books will be complete, but without any address slip, just a bar code on the back cover. The books will then be machine enveloped into non-window envelopes with the bar code (26) showing through the throat of the envelope, but the envelope will not be sealed. The envelopes may then be fed into a Bell and Howell Lasermatch machine. This machine feeds envelopes individually, opens the flap of the envelope (28), scans the bar code (26) on the back cover (see Figure 3) and then ink jets the address onto the envelope (28). The Lasermatch system houses a powerful PC which will be updated with each day's names and addresses. These will be identified from the bar code.

By using the Lasermatch, envelope costs will be reduced, as non-window envelopes will be used and these are cheaper than window envelopes. By using non-window envelopes, the security of the product is obviously enhanced. Finally, because we are actually reading the bar code once the book is in the envelope, we shall be able to utilise this as the final stage of the audit trail. From the PC in the Lasermatch system we shall be able to get a listing of those books despatched and an exceptions report for the books not despatched.

The particular way described for enveloping the books and addressing the envelopes is merely one example of a preferred method, and other techniques can be used whereby an address is provided based on the coded information on the book cover.

The present invention is not limited to cheque books and may be used for any item for which security is an important consideration. Whilst the invention has been particularly described with reference to cheque book production, it is to be understood as not limited to the production of cheque books.

## Claims

1. A method of producing an addressed security item, comprising the steps of reading a codeline (14) present on the item (10), printing a corresponding bar code (26) on the item, enveloping the item (10) and, using the bar code (26), printing the appropriate address on the envelope (28).

2. A method according to claim 1, wherein the security item (10) is a book, and the codeline (14) present on a page of the book is read and a corresponding bar code (26) printed on the book cover.

3. A method according to claim 2, wherein the security item is a cheque book, and the codeline (14) present on the cheques in the cheque book is read and a corresponding bar code (26) printed on the cheque book cover.

4. A method according to claim 2 or claim 3, wherein the book is held open as the codeline (14) is read.

5. A method according to any of claims 1 to 4, wherein the codeline (14) is read by an optical scanner (16) which is linked to a personal computer (18), the computer (18) being linked to an ink jet printer (20) which will print the bar code (26) on the security item (10).

6. A method according to claim 5, wherein the personal computer (18) is also linked to a bar code reader (24) adapted to check that the correct bar code (26) has been printed and that it is readable.

7. A method according to any of claims 1 to 6 wherein the bar code is printed with black ink or with an invisible UV ink.

8. A method according to any preceding claim wherein the security item is enveloped with the bar code (26) showing through the throat of the envelope (28), the bar code (26) is scanned, and the address is ink jetted onto the envelope (28).
